# EUROPEAN PATENT APPLICATION

(11) **EP 2 664 745 A2**
(43) Date of publication of application: **20.11.2013**
(21) Application number: 13167696.7
(22) Date of filing: 14.05.2013
(51) Int. Cl.: F01D 11/00, F16J 15/32

(54) **System for sealing a gas path in a turbine**

(30) Priority: 14.05.2012 US 201213470538
(71) Applicant: General Electric Company, Schenectady, New York 12345 (US)
(72) Inventor: Sakekar, Kunal Upendra, 560066 Bangalore (IN); Sha, Karimulla Shaik, 560066 Bangalore (IN); Ram, Bhaskar, 560066 Bangalore (IN); Pakkala, Srinivas, 560066 Bangalore (IN)
(74) Representative: Cleary, Fidelma

(57) **Abstract**

A system for sealing a gas path in a turbine includes a brush holder (32) and a support (36) connected to the brush holder (32) and extending away from the brush holder. The support has an upstream side (38) and a downstream side (40). A plurality of upstream bristles (42) is connected to the brush holder along the upstream side of the support (38), and a plurality of downstream bristles (44) is connected to the brush holder along the downstream side of the support (40). The upstream and downstream bristles have terminal ends 46 that extend away from the brush holder (32).

## Description

The present disclosure generally involves a system for sealing a gas path in a turbine.

Turbines are widely used in a variety of aviation, industrial, and power generation applications to perform work. Each turbine generally includes alternating stages of peripherally mounted stator vanes and axially mounted rotating blades. The stator vanes may be attached to a stationary component such as a casing that surrounds the turbine, and the rotating blades may be attached to a rotor located along an axial centerline of the turbine. A compressed working fluid, such as steam, combustion gases, or air, flows along a gas path through the turbine. The stator vanes accelerate and direct the compressed working fluid onto the subsequent stage of rotating blades to impart motion to the rotating blades, thus turning the rotor and performing work.

Compressed working fluid that leaks around or bypasses the stator vanes or rotating blades reduces the efficiency of the turbine, and various systems and methods have been developed to reduce and/or prevent the compressed working fluid from leaking around the stator vanes or rotating blades. For example, bristles or brushes may be installed between the various stationary and rotating components to form a brush seal that reduces or prevents the compressed working fluid from escaping the gas path and/or bypassing the turbine components. However, the compressed working fluid may still pass through spaces between individual bristles or around the ends of the bristles, particularly after extended operations that tend to create flow paths through the bristles. As a result, an improved system for sealing the gas path in a turbine would be useful.

Aspects and advantages of the invention are set forth below in the following description, or may be obvious from the description, or may be learned through practice of the invention.

One embodiment of the present invention is a system for sealing a gas path in a turbine. The system includes a brush holder and a support connected to the brush holder and extending away from the brush holder. The support has an upstream side and a downstream side. A plurality of upstream bristles is connected to the brush holder along the upstream side of the support, and a plurality of downstream bristles is connected to the brush holder along the downstream side of the support. The upstream and downstream bristles have terminal ends that extend away from the brush holder.

Another embodiment of the present invention is a system for sealing a gas path in a turbine that includes a first gas path component and a brush holder at least partially recessed in the first gas path component. A support is connected to the brush holder and extends away from the brush holder. The support has an upstream side and a downstream side. A plurality of upstream bristles is connected to the brush holder along the upstream side of the support, and a plurality of downstream bristles is connected to the brush holder along the downstream side of the support. The upstream and downstream bristles have terminal ends that extend away from the brush holder.

The present invention may also include a system for sealing a gas path in a turbine that includes a brush holder and a plurality of bristles connected to the brush holder. The plurality of bristles has an upstream portion, a downstream portion, and terminal ends that extend away from the brush holder. A first gas path component has a stepped surface that simultaneously engages the downstream portion and the terminal ends of the plurality of bristles.

Those of ordinary skill in the art will better appreciate the features and aspects of such embodiments, and others, upon review of the specification.

A full and enabling disclosure of the present invention, including the best mode thereof to one skilled in the art, is set forth more particularly in the remainder of the specification, including reference to the accompanying figures, in which:
Fig. 1 is a simplified side cross-section view of a system for sealing a gas path in an exemplary turbine according to one embodiment of the present invention;
Fig. 2 is a side cross-section view of the system shown in Fig. 1 when the turbine is cooled down;
Fig. 3 is a top plan view of the system shown in Fig. 1;
Fig. 4 is an enlarged side cross-section view of the system shown in Fig. 1 when the turbine is warmed up;
Fig. 5 is an enlarged side cross-section view of a second embodiment of the system shown in Fig. 1; and
Fig. 6 is an enlarged side cross-section view of a third embodiment of the system shown in Fig. 1.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. In addition, the terms "upstream" and "downstream" refer to the relative location of components in a fluid pathway. For example, component A is upstream from component B if a fluid flows from component A to component B. Conversely, component B is downstream from component A if component B receives a fluid flow from component A.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a system for sealing a gas path in a turbine. The turbine generally includes alternating stages of stationary vanes and rotating blades, as is known in the art. The system generally includes a plurality of bristles held in place by a brush holder. A support, shim, or barrier may extend from the brush holder to support the bristles and/or reduce working fluid flow through the bristles. In particular embodiments, the system may include one or more gas path components that hold the brush holder in place and/or engage multiple sides of the bristles to reduce the working fluid flow around the bristles. Although exemplary embodiments of the present invention will be described generally in the context of a gas path in a gas turbine, one of ordinary skill in the art will readily appreciate that embodiments of the present invention may be applied to any turbine.

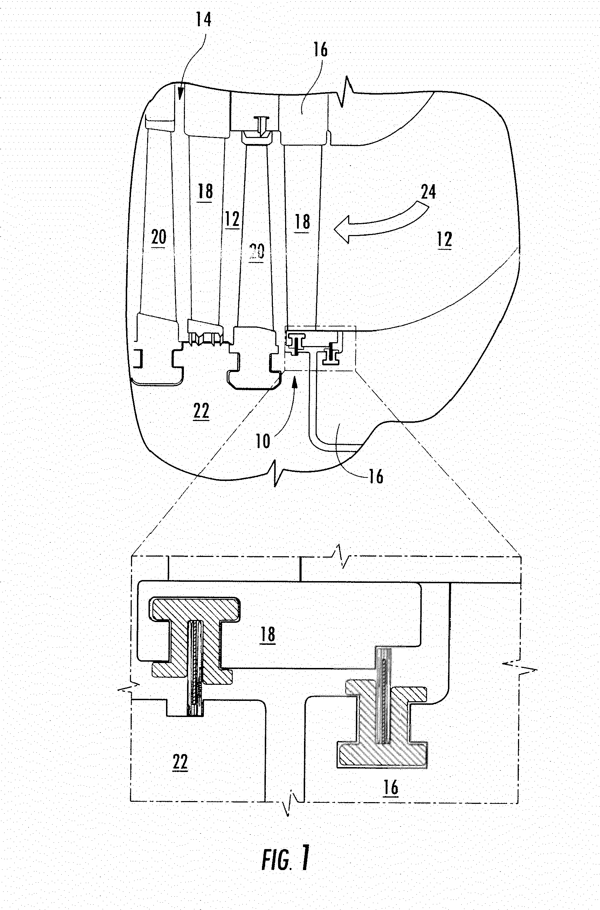

Fig. 1 provides a simplified side cross-section view of a system 10 for sealing a gas path 12 in an exemplary turbine 14 according to one embodiment of the present invention. As shown in Fig. 1, the turbine 14 may include stationary and rotating components surrounded by a casing 16. The stationary components may include, for example, stationary nozzles or stator vanes 18 attached to the casing 16. The rotating components may include, for example, rotating blades 20 attached to a rotor 22. A working fluid 24, such as steam, combustion gases, or air, flows along the hot gas path 12 through the turbine 14 from right to left as shown in Fig. 1. The first stage of stator vanes 18 accelerates and directs the working fluid 24 onto the first stage of rotating blades 20, causing the first stage of rotating blades 20 and rotor 22 to rotate. The working fluid 24 then flows across the second stage of stator vanes 18 which accelerates and redirects the working fluid 24 to the next stage of rotating blades 20, and the process repeats for each subsequent stage.

The casing 16 and the rotor 22 generally define the outer perimeter of the gas path 12 through the turbine 14, and the system 10 may be installed between various components in the gas path 12 to reduce the amount of the working fluid 24 that bypasses the stator vanes 18 or rotating blades 20. For example, as shown in the enlarged portion of Fig. 1, the system 10 may be installed between stationary components, such as the stator vane 18 and the casing 16. Alternately or in addition, the system 10 may be installed between a stationary component and a rotating component, such as the stator vane 18 and the rotor 22.

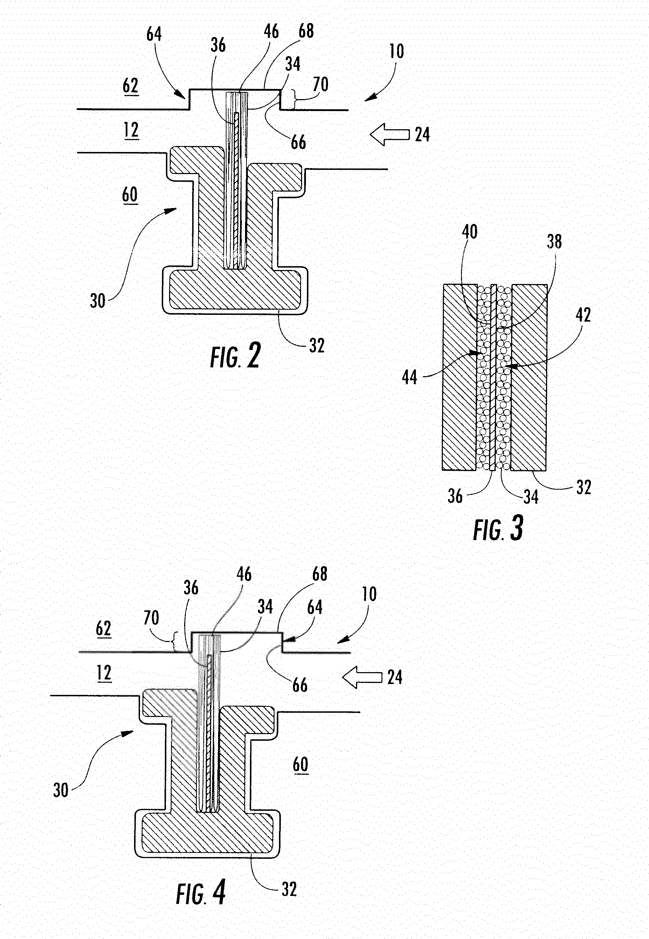

Figs. 2-4 provide various side cross-section and plan views of a first embodiment of the system 10 shown in Fig. 1 during various operating conditions of the turbine 14. The system 10 generally includes a brush seal 30 that provides a partial or complete fluid barrier between two components in the gas path 12. The brush seal 30 generally includes a brush holder 32, a plurality of bristles 34, and a support or barrier 36 between the bristles 34. The brush holder 32, bristles 34, and support or barrier 36 may be manufactured from any material capable of continuous exposure to the gas path 12. For example, the brush holder 32, bristles 34, and/or support or barrier 36 may be manufactured from carbon steel, low alloy steel, ceramic composites, or other suitable material. In particular embodiments, a thermal barrier coating having one or more of the following characteristics may be applied to the bristles 34 and/or support 36: low emissivity or high reflectance for heat, a smooth finish, and good adhesion to the underlying surface. For example, thermal barrier coatings known in the art include metal oxides, such as zirconia (Zr02), partially or fully stabilized by yttria (Y203), magnesia (MgO), or other noble metal oxides. The selected thermal barrier coating may be deposited by conventional methods using air plasma spraying (APS), low pressure plasma spraying (LPPS), or a physical vapor deposition (PVD) technique, such as electron beam physical vapor deposition (EBPVD), which yields a strain-tolerant columnar grain structure. The selected thermal barrier coating may also be applied using a combination of any of the preceding methods to form a tape which is subsequently transferred for application to the underlying substrate, as described, for example, in U.S. Patent 6,165,600, assigned to the same assignee as the present invention. The bristles 34 may have a diameter ranging from 2-20 mils, depending on the particular application, and the support or barrier 36 may be a continuous or segmented barrier having a similar thickness. However, one of ordinary skill in the art will readily appreciate that the materials and dimensions for the various components in the brush seal 30 are not limitations of the present invention unless specifically recited in the claims.

The bristles 34 may be a collection of hairs or quills, and the support or barrier 36 may be a flexible plate, disc, or other generally planar device suitable for blocking or obstructing fluid flow across the brush seal 30. For example, as best shown in Figs. 2 and 4, the bristles 34 and the support or barrier 36 may be welded or otherwise connected to the brush holder 32 and extend away from the brush holder 32. As best shown in Fig. 3, the support 36 may have an upstream side 38 and a downstream side 40 with respect to the fluid flow through the gas path 12, and the bristles 34 may include an upstream portion 42, a downstream portion 44, and terminal ends 46 that extend away from the brush holder 32. In this manner, an upstream portion 48 of the brush holder 32 may compresses the upstream portion 42 of the bristles 34 against the upstream side 38 of the support 36, and a downstream portion 50 of the brush holder 32 may compress the downstream portion 44 of the bristles 34 against the downstream side 40 of the support 36.

As shown in Figs. 2 and 4, the brush holder 32 may be connected to and/or at least partially recessed in a first gas path component 60, and a second gas path component 62 opposed to the first gas path component 60 may have a stepped surface 64. The stepped surface 64 may include a substantially vertical portion 66 and a substantially horizontal portion 68 that at least partially define a depth 70 in the second gas path component 62. As shown in Figs. 2 and 4, the terminal end 46 of the bristles 34 may be engaged with the substantially horizontal portion 68 to reduce fluid flow across the brush seal 30. In particular embodiments, the depth 70 of the stepped surface 64 may be greater than or equal to a difference in length between the bristles 34 and the support 36, depending on the specific application. For example, the distance between the first and second gas path components 60, 62, the depth 70 of the stepped surface 64, and/or the anticipated pressure of the working fluid 24 in the gas path 12 are all variables in specific applications that may be used to determine the length of the support 36 and/or bristles 34. As the turbine 14 warms up and the various gas path components 60, 62 move relative to one another due to thermal expansion, the substantially vertical portion 66 of the stepped surface 64 may sandwich the downstream portion 42 of the bristles 34 against the support 36, as shown most clearly in Fig. 4. In this manner, the stepped surface 64 may simultaneously engage the terminal ends 46 of the bristles 34 and the downstream portion 42 of the bristles 34, and the bristles 34 and support 36 may combine to further reduce fluid flow across the brush seal 30.

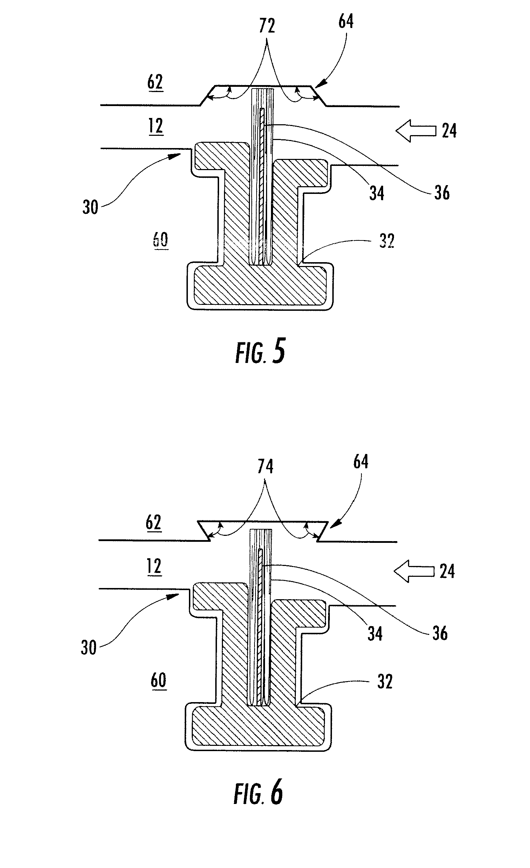

Figs. 5 and 6 provide alternate embodiments of the system 10 shown in Fig. 1. As shown in each figure, the system 10 again includes the brush seal 30 between the first and second gas path components 60, 62 as previously described with respect to Figs. 2-4. In the particular embodiment shown in Fig. 5, the stepped surface 64 forms an obtuse angle 72 in the second gas path component 62. Alternately, as shown in Fig. 6, the stepped surface 64 may form an acute angle 74 in the first gas path component 62. The obtuse angle 72 shown in Fig. 5 and the acute angle 74 shown in Fig. 6 result in a sloped surface in the stepped surface 64 that may improve the seal between the stepped surface 64 and the bristles 34 to further reduce fluid flow across the brush seal 30.

This written description uses examples to disclose the invention, including the best mode, and also to enable any person skilled in the art to practice the invention, including making and using any systems or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for sealing a gas path in a turbine, comprising:
   a brush holder;
   a support connected to the brush holder and extending away from the brush holder, wherein the support has an upstream side and a downstream side;
   a plurality of upstream bristles connected to the brush holder along the upstream side of the support; and
   a plurality of downstream bristles connected to the brush holder along the downstream side of the support, wherein the upstream and downstream bristles have terminal ends that extend away from the brush holder.
2. The system as in clause 1, wherein the brush holder comprises an upstream portion that compresses the upstream bristles against the upstream side of the support and a downstream portion that compresses the downstream bristles against the downstream side of the support.
3. The system as in any preceding clause, further comprising a first gas path component having a stepped surface, wherein the stepped surface simultaneously engages the terminal ends of the upstream and downstream bristles and a downstream side of the downstream bristles.
4. The system as in any preceding clause, wherein the stepped surface at least partially defines a depth in the first gas path component that is greater than or equal to a difference in length between the downstream bristles and the support.
5. The system as in any preceding clause, wherein the stepped surface comprises a substantially vertical portion and a substantially horizontal portion.
6. The system as in any preceding clause, wherein the stepped surface forms an acute angle in the first gas path component.
7. The system as in any preceding clause, further comprising a second gas path component opposed to the first gas path component, wherein at least a portion of the brush holder is recessed inside the second gas path component.
8. A system for sealing a gas path in a turbine, comprising:
   a first gas path component;
   a brush holder at least partially recessed in the first gas path component;
   a support connected to the brush holder and extending away from the brush holder, wherein the support has an upstream side and a downstream side;
   a plurality of upstream bristles connected to the brush holder along the upstream side of the support; and
   a plurality of downstream bristles connected to the brush holder along the downstream side of the support, wherein the upstream and downstream bristles have terminal ends that extend away from the brush holder.
9. The system as in any preceding clause, wherein the brush holder comprises an upstream portion that compresses the upstream bristles against the upstream side of the support and a downstream portion that compresses the downstream bristles against the downstream side of the support.
10. The system as in any preceding clause, further comprising a second gas path component having a stepped surface, wherein the stepped surface at least partially defines a depth in the second gas path component that is greater than or equal to a difference in length between the downstream bristles and the support.
11. The system as in any preceding clause, wherein the stepped surface simultaneously engages the terminal ends of the upstream and downstream bristles and a downstream side of the downstream bristles.
12. The system as in any preceding clause, wherein the stepped surface comprises a substantially vertical portion and a substantially horizontal portion. 13. The system as in any preceding clause, wherein the stepped surface forms an acute angle in the first gas path component.
14. A system for sealing a gas path in a turbine, comprising:
   a brush holder;
   a plurality of bristles connected to the brush holder, wherein the plurality of bristles has an upstream portion, a downstream portion, and terminal ends that extend away from the brush holder;
   a first gas path component having a stepped surface, wherein the stepped surface simultaneously engages the downstream portion and the terminal ends of the plurality of bristles.
15. The system as in any preceding clause, wherein the stepped surface comprises a substantially vertical portion and a substantially horizontal portion.
16. The system as in any preceding clause, wherein the stepped surface forms an acute angle in the first gas path component.
17. The system as in any preceding clause, further comprising a second gas path component opposed to the first gas path component, wherein at least a portion of the brush holder is recessed inside the second gas path component.
18. The system as in any preceding clause, further comprising a support connected to the brush holder between the plurality of bristles, wherein the support has an upstream side and a downstream side.
19. The system as in any preceding clause, wherein the brush holder comprises an upstream portion that compresses the upstream portion of the bristles against the upstream side of the support and a downstream portion that compresses the downstream portion of the bristles against the downstream side of the support.
20. The system as in any preceding clause, wherein the stepped surface at least partially defines a depth in the first gas path component that is greater than or equal to a difference in length between the downstream bristles and the support.

## Claims

1. A system (10) for sealing a gas path in a turbine (14), comprising:
a. a brush holder (32);
b. a support (36) connected to the brush holder (32) and extending away from the brush holder, wherein the support has an upstream side (38) and a downstream side (40);
c. a plurality of upstream bristles (42) connected to the brush holder along the upstream side of the support; and
d. a plurality of downstream bristles (44) connected to the brush holder along the downstream side of the support, wherein the upstream and downstream bristles have terminal ends (46) that extend away from the brush holder (32).

2. The system as in claim 1, wherein the brush holder (32) comprises an upstream portion that compresses the upstream bristles (42) against the upstream side of the support and a downstream portion that compresses the downstream bristles (44) against the downstream side of the support.

3. The system as in claim 1 or claim 2, further comprising a first gas path component (60) having a stepped surface (64), wherein the stepped surface simultaneously engages the terminal ends of the upstream and downstream bristles and a downstream side of the downstream bristles.

4. The system as in claim 3, wherein the stepped surface (64) at least partially defines a depth in the first gas path component (60) that is greater than or equal to a difference in length between the downstream bristles and the support.

5. The system as in claim 3 or claim 4, wherein the stepped surface (64) comprises a substantially vertical portion and a substantially horizontal portion.

6. The system as in claim 3, 4 or 5, wherein the stepped surface (64) forms an acute angle in the first gas path component.

7. The system as in claim 3, 4, 5 or 6, further comprising a second gas path component (62) opposed to the first gas path component (60), wherein at least a portion of the brush holder is recessed inside the second gas path component.

8. The system of any preceding claim, comprising:
a first gas path component (60) wherein:
the brush holder (32) is at least partially recessed in the first gas path component.

9. The system as in claim 8, comprising a second gas path component (62) having a stepped surface (64), wherein the stepped surface at least partially defines a depth in the second gas path component that is greater than or equal to a difference in length between the downstream bristles and the support.

10. The system as in claim 9, wherein at least one of:
the stepped surface simultaneously engages the terminal ends (46) of the upstream and downstream bristles and a downstream side of the downstream bristles;
the stepped surface comprises a substantially vertical portion and a substantially horizontal portion; and
the stepped surface forms an acute angle in the first gas path component.

11. A system for sealing a gas path in a turbine, comprising:
a. a brush holder (32);
b. a plurality of bristles (34) connected to the brush holder, wherein the plurality of bristles has an upstream portion (42), a downstream portion (44), and terminal ends (46) that extend away from the brush holder (32);
c. a first gas path component (60) having a stepped surface (64), wherein the stepped surface simultaneously engages the downstream portion and the terminal ends of the plurality of bristles.

12. The system as in claim 11, wherein the stepped surface comprises a substantially vertical portion and a substantially horizontal portion, and/or wherein the stepped surface forms an acute angle in the first gas path component.

13. The system as in claim 11 or claim 12, further comprising a second gas path component (62) opposed to the first gas path component (60), wherein at least a portion of the brush holder is recessed inside the second gas path component.

14. The system as in claim 11, 12 or 13, further comprising a support (36) connected to the brush holder (32) between the plurality of bristles (34), wherein the support has an upstream side and a downstream side.

15. The system as in claim 14, wherein at least one of:
the brush holder comprises an upstream portion that compresses the upstream portion of the bristles (42) against the upstream side of the support (36) and a downstream portion that compresses the downstream portion of the bristles (44) against the downstream side of the support, and
the stepped surface at least partially defines a depth in the first gas path component (60) that is greater than or equal to a difference in length between the downstream bristles and the support.
